# EUROPÄISCHE PATENTSCHRIFT

(11) **EP 0 788 585 B1**
(45) Veröffentlichungstag und Bekanntmachung des Hinweises auf die Patenterteilung: **12.08.1998**
(21) Anmeldenummer: 95935454.9
(22) Anmeldetag: 17.10.1995
(51) Int. Cl.: F16B 21/18, B25B 27/20, B23P 19/08

(54) **BEFESTIGUNGSRING, VORRICHTUNG FÜR DESSEN MONTAGE UND MONTAGEVERFAHREN FÜR DEN BEFESTIGUNGSRING**
SECURING RING, DEVICE FOR FITTING IT AND PROCESS THEREFOR
BAGUE DE FIXATION, PROCEDE ET DISPOSITIF PERMETTANT DE LA MONTER

(30) Priorität: 24.10.1994 DE 4437967
(43) Veröffentlichungstag der Anmeldung: 13.08.1997
(73) Patentinhaber: LUCAS INDUSTRIES PUBLIC LIMITED COMPANY, Solihull, West Midlands B91 3TX (GB)
(72) Erfinder: KRAUTKREMER, Hubert, D-56218 Mülheim-Kärlich (DE); MAYER, Gerd, D-56357 Gemmerich (DE); STRAUB, René, F-57220 Holling (FR)
(74) Vertreter: Schmidt, Steffen J., Dipl.-Ing.
(86) Internationale Anmeldenummer: EP9504074
(87) Internationale Veröffentlichungsnummer: WO9612895

(56) Entgegenhaltungen:
- DE-C- 638 619
- FR-A- 994 526
- GB-A- 1 165 680

## Beschreibung

Die vorliegende Erfindung betrifft einen Befestigungsring.

Mit einem derartigen Befestigungsring kann z.B. eine abgesetzte Welle in einer Bohrung axial festgelegt werden. Dazu sind im Stand der Technik (GB-A-1 165 680) Befestigungsringe bekannt. Mit derartigen Befestigungsringen für Wellen bzw. Bohrungen, die in einer Aufnahmenut der Welle bzw. der Bohrung in radial zusammengedrücktem bzw. radial aufgeweitetem gespannten Zustand ein Montieren eines entsprechenden Maschinenteiles durch axiales Über- bzw. Einschieben ermöglichen, kann in radial entspanntem, in eine Rastnut im Maschinenteil hineinragenden Zustand dieses Maschinenteil axial festgelegt gehalten werden. Dazu sind die Enden dieser Befestigungsringe jeweils auf etwa ¼ der Ringlänge für eine Welle nach innen bzw. für eine Bohrung nach außen derart abgebogen, daß sich die Enden, den Runddrahtsprengring im wesentlichen konzentrisch zu seiner Aufnahmenut haltend, am Nutengrund abstützen.

Aus der DE 36 35 020 C2 ist ein aus Federdraht gefertigter Sicherungsring bekannt, der nach innen abgewinkelte Enden aufweist. Ein derartiger Sicherungsring wird durch Überstreifen in gespreiztem Zustand in eine Nut einer Anschlagscheibe so eingelegt, daß seine abgewinkelten Enden in eine axiale Aussparung der Anschlagscheibe zu liegen kommen. Die derart vormontierte Baueinheit aus der Anschlagscheibe und dem Sicherungsring wird zur Montage in ein zylindrisches Gehäuse eingeschoben, wobei der Sicherungsring mittels eines an den abgewinkelten Enden angreifenden Spannwerkzeuges radial soweit zusammengespannt wird, daß er während des Einschiebevorgangs völlig in der Nut der Anschlagscheibe verschwindet. Nach axialer Positionierung dieser vormontierten Baueinheit spreizt sich der Sicherungsring radial wieder auf, so daß er teilweise in der Nut der Anschlagscheibe und teilweise in einer Umfangsnut des zylindrischen Gehäuses zu liegen kommt und so die Anschlagscheibe in der gewünschten Weise axial fixiert.

Aus der DE 12 51 091 B2 ist eine lösbare Verbindung zweier Gehäuseteile beschrieben, bei der der Außenumfang eines zylindrischen Ansatzes des einen Gehäuseteils eine Ringnut und die Wandung einer zylindrischen, den Ansatz aufnehmenden Ausnehmung des anderen Gehäuseteiles eine in radialer Richtung sich an die erste Ringnut anschließende Ringnut aufweist. In den beiden Ringnuten befindet sich ein ovaler Ringkörper, der in ausgebauter Stellung eine Kreisform mit einem zwischen den Bodendurchmessern der beiden Ringnuten liegenden Durchmesser aufweist. In seiner eingebauten Stellung ist der Ringkörper durch zwei um 180° zueinander versetzte Schrauben zu einem Oval gedrückt, wobei die Wandung der Ausnehmung am äußeren Ende einen erweiterten, den Ansatz mit weitem Spiel umfassenden Durchmesser aufweist. Diese lösbare Verbindung ist zwar in der Lage relativ große axiale Kräfte aufzunehmen. Allerdings ist sie auch in der Herstellung relativ aufwendig, da die Schraubgewinde für die beiden Klemmschrauben angefertigt werden müssen und die Klemmschrauben in ihre Gewinde eingeschraubt werden müssen.

Werden höhere Anforderungen an die Aufnahme von Axialkräften und an eine leichte Montierbarkeit gestellt, werden aus Blech gestanzte Wellensicherungsringe eingesetzt, die an ihren Enden Bohrungen zur Aufnahme eines Spannwerkzeuges aufweisen.

Üblicherweise haben derartige Wellensicherungsringe einen Querschnitt, der sich entlang des Umfangs des Wellensicherungsrings ändert. Im Bereich der Enden ist der Querschnitt etwa genau so groß wie im Mittelbereich. Dies hat zur Folge, daß derartige Sicherungsringe im zusammengedrückten Zustand oval werden. Damit sind diese Ringe in-sehr beengten Montageverhältnissen unbrauchbar.

Wenn ein derartiger Wellensicherungsring in dem schmalen Spalt zwischen einer abgesetzten Welle und einer Zylinderbohrung montiert bzw. demontiert werden muß, treten außerdem insofern Schwierigkeiten auf, als übliche Montagezangen leicht aus den Bohrungen des Wellensicherungsringes herausrutschen. Das gleiche gilt im übrigen auch für die Wellensicherungsringe aus Draht mit abgebogenen Ringenden. Oftmals ist der Wellensicherungsring einige Zentimeter tief in den Ringspalt zwischen der abgesetzten Welle und der Zylinderbohrung einzuführen. Dies erschwert die Handhabung erheblich. Schließlich ist der in die Umfangsnut eingerastete Wellensicherungsring oftmals so tief in die Umfangsnut der Bohrung eingerastet, daß die Bohrungen zur Aufnahme des Werkzeugs bzw. die an den abgewinkelten Enden gebildeten Augen teilweise durch die Flanken der Ringnut verdeckt werden. Dies hat zur Folge, daß das Werkzeug den Wellensicherungsring nicht oder nur sehr schwer fassen kann.

Der Erfindung liegt damit die Aufgabe zugrunde, einen Befestigungsring bereitzustellen, der eine einfache Montage und Demontage ermöglicht.

Die Lösung dieser Aufgabe ist ein Befestigungsring mit einer im Ruhezustand etwa kreisrunden Gestalt, der zwei voneinander beabstandete Ringenden, einen über wenigstens 150° seines Umfangs im wesentlichen konstanten Querschnitt, und im Bereich jedes Ringendes eine zu seinem Innenumfang hin offene Ausnehmung aufweist.

Dies ermöglicht ein sicheres Eingreifen eines Spannwerkzeuges in die Ausnehmungen an den Ringenden, wobei die Ausnehmungen so weit in die Ringfläche hineinreichen können, daß das Spannwerkzeug ohne Schwierigkeiten einführbar ist. Durch den über weite Abschnitte des Befestigungsrings gleichen Querschnitt wird wirksam verhindert, daß die Ringenden in einer Ringnut soweit eintauchen können, daß ein Spannwerkzeug nicht mehr in die Ausnehmungen greifen kann.

Eine besonders überraschende Eigenschaft des erfindungsgemäßen Befestigungsrings besteht darin, daß die durch den Befestigungsring aufnehmbaren Axialkräfte höher als bei ähnlichen Wellensicherungsringen sind.

Ein weiterer unerwarteter Effekt des erfindungsgemäßen Befestigungsringes besteht darin, daß dieser beim Zusammenziehen der beiden Ringenden seine Kreisform - mit kleinerem Durchmesser - im wesentlichen behält.

Bei einer bevorzugten Ausführungsform des Befestigungsrings ist der Bereich im wesentlichen konstanten Querschnitts im Querschnitt rechteckig, quadratisch, rund oder oval und ist zu den Ringenden symmetrisch.

Bei einer bevorzugten Ausführungsform des Befestigungsrings erstreckt sich der Bereich im wesentlichen konstanten Querschnitts über bis zu 250°, vorzugsweise über etwa 202° des Umfangs des Befestigungsrings. Damit ist eine besonders einfach Montage und Demontage des Befestigungsrings möglich.

Bei einer Ausführungsform des Befestigungsrings grenzt an die beiden Enden des Bereichs im wesentlichen konstanten Querschnitts jeweils eine zum Außenumfang des Befestigungsrings hin offene Ausnehmung an. Damit kann der Befestigungsring sicher in einer zusammengedrückten Stellung gehalten werden, nachdem er durch ein Spannwerkzeug in diese Stellung gebracht wurde.

Um den Befestigungsring möglichst sicher und genau in seiner jeweiligen zusammengedrückten Stellung zu halten ist es vorteilhaft, wenn jede der zum Außenumfang des Befestigungsrings hin offenen Ausnehmungen einen Winkelbereich von etwa 5° - 30° einschließt.

Bei einer besonders-bevorzugten Ausführungsform des Befestigungsrings weist jede der zum Außenumfang des Befestigungsrings hin offenen Ausnehmungen einen zur Umhüllenden des Befestigungsrings exzentrisch nach innen versetzten Grund auf, der eine konvexe, vorzugsweise etwa halbkreisförmige Gestalt hat. Die Exzentrität des Grundes kann dadurch definiert werden, daß ein Kreis mit geringerem Durchmesser als die Umhüllende des Befestigungsrings um etwa 1% - 10% des Durchmessers der Umhüllenden des Befestigungsrings von dem Mittelpunkt der Umhüllenden vorzugsweise zu dem Bereich konstanten Querschnitts hin versetzt ist.

Um ein Verhaken oder Verkanten des Befestigungsrings beim Montieren zu vermeiden, schließen sich an den Grund jeder der zum Außenumfang des Befestigungsrings hin offenen Ausnehmungen jeweils Flanken der Ausnehmungen mit abgerundeten Übergängen an.

Damit der Befestigungsring sicher in seiner zusammengedrückten Stellung gehalten wird, ist vorzugsweise die dem jeweiligen Ringende nähere Flanke jeder der zum Außenumfang des Befestigungsrings hin offenen Ausnehmungen tiefer als die vom jeweiligen Ringende entferntere Flanke.

Jede der zum Außenumfang des Befestigungsrings hin offenen Ausnehmungen nimmt etwa 10% - 60% des Querschnitts des Befestigungsrings ein.

Um die Ringenden soweit wie nötig zusammendrücken zu können, damit der Befestigungsring leicht in seine Montagestellung bringbar ist, sind die Ringenden im Ruhezustand des Befestigungsrings vorzugsweise mit einem Öffnungswinkel von 5° - 50° voneinander beabstandet.

Um ein Eingreifen eines Spannwerkzeuges auch für eine leichte Demontage in engen Verhältnissen zu erleichtern, haben die zum Innenumfang hin offenen Ausnehmungen einen konvexen, vorzugsweise etwa halbkreisförmigen Grund und sich daran anschließende gerade verlaufende Flanken.

Damit auch hohe Spannkräfte zum Zusammendrücken oder Zusammenziehen des Befestigungsrings auf dessen Ringenden ausgeübt werden können, haben die zum Innenumfang hin offenen Ausnehmungen jeweils eine von der Mitte des Befestigungsrings wegweisende Mittelachse.

Vorzugsweise schließt dabei die von der Mitte des Befestigungsrings wegweisende Mittelachse mit der Symmetrieachse des Befestigungsrings einen Winkel von etwa 5° - 25° ein. Diese erlaubt hohe Spannkräfte und ermöglicht gleichzeitig ein sicheres Eingreifen einer Spannzange oder Spannvorrichtung auch in beengten Verhältnissen.

Ein weiterer Aspekt der Erfindung betrifft eine Vorrichtung zur Montage der vorstehend beschriebenen Befestigungsringe. Diese Vorrichtung hat eine Aufnahme für einen Befestigungsring, dessen Ringenden zumindest teilweise zusammengedrückt sind, und zwei aus der Aufnahme vorstehende Vorsprünge, die jeweils in eine der zum Außenumfang des Befestigungsrings hin offenen Ausnehmungen eingreifen.

Damit können die vorstehend beschriebenen Befestigungsringe einfach und sicher auch in einer engen Umgebung schnell montiert werden.

Vorzugsweise ist die Aufnahme durch eine Hülse gebildet, deren eine Stirnfläche der Umfangsgestalt des Befestigungsrings angenähert ist. Bei dieser Stirnfläche sind die Vorsprünge angeordnet.

Bei einer Ausführungsform der Vorrichtung weist die Aufnahme wenigstens eine im Querschnitt kreisabschnitts- oder kreissektorförmige Verjüngung auf, an der eine Verschiebeeinrichtung angeordnet ist. Mit dieser Verschiebeeinrichtung kann ein an der Vorrichtung befindlicher Befestigungsring in seine montierte Endstellung gebracht werden.

Bevorzugt weist die Aufnahme eine erste Verschiebeeinrichtung auf, die im Bereich der Ringenden an einem Befestigungsring angreift, sowie eine zweite Verschiebeeinrichtung, die der ersten Verschiebeeinrichtung diametral gegenüberliegend angeordnet und insbesondere mit dieser gemeinsam betätigbar ist. Damit können auch tief in eine Bohrung einzubringende Befestigungsringe einfach und schnell (ggf. auch mittels eines diese Vorrichtung aufweisenden Handhabungsautomaten) montiert werden.

Um einen Befestigungsring mit dieser Vorrichtung in eine in der Bohrung angeordnete Ringnut oder hinter eine Stufe zu bringen ist jede Verschiebeeinrichtung in Längsrichtung der Hülse zwischen einer zurückgezogenen Stellung, in der sie gegenüber der Aufnahme zurückgenommen ist, und einer vorgeschobenen Stellung verschiebbar, in der sie die Vorsprünge überragt.

Gemäß einer besonders bevorzugten Ausführungsform ist bei der Vorrichtung die Hülse zur Aufnahme eines mit dem Befestigungsring zu befestigenden Bauteils oder Baugruppe eingerichtet. Wenn die Hülse das Bauteil oder die Baugruppe paßgenau aufnimmt, kann auch bei geringen Toleranzen eine schnelle und sichere Montage erreicht werden.

Das Verfahren zur Montage eines oben beschriebenen Befestigungsrings umfaßt gemäß einem weiteren Aspekt der Erfindung folgende Schritte:
Zusammenziehen der Ringenden, so daß der Befestigungsring einen verringerten Durchmesser aufweist,
Halten des Befestigungsrings auf seinem verringerten Durchmesser,
Einführen des Befestigungsrings in einer Öffnung bis zu einer Nut oder zu einer Stufe in der Öffnung,
Freigeben des Befestigungsrings, so daß sich dessen Durchmesser wieder vergrößert, und sich der Befestigungsring in der Nut einfügt oder an der Stufe anliegt.

Dabei erfolgt vorzugsweise der Schritt des Zusammenziehens der Ringenden mittels der zum Innenumfang hin offenen Ausnehmungen, und
der Schritt des Haltens des Befestigungsrings mittels der zum Außenumfang hin offenen Ausnehmungen, in die jeweils ein Vorsprung eingreift.

Schließlich erfolgt der Schritt des Freigebens des Befestigungsrings vorzugsweise durch Verschieben des Befestigungsrings, so daß die Ausnehmungen von den Vorsprüngen freikommen.

Weitere Vorteilhafte Ausgestaltungen, Weiterbildungen und Eigenschaften der Erfindung werden nachstehend anhand der Zeichnungen erläutert, wobei
- Fig. 1: einen Befestigungsring in einer schematischen Draufsicht zeigt,
- Fig. 1a: einen mit A bezeichneten Ausschnitt aus Fig. 1 in einer vergrößerten schematischen Draufsicht zeigt,
- Fig. 2: eine Vorrichtung zur Montage des Befestigungsrings nach Fig. 1 in einer schematischen Schnittansicht zeigt,
- Fig. 3: die Vorrichtung nach Fig. 2 in einer seitlichen Draufsicht zeigt,
- Fig. 4: die Vorrichtung nach Fig. 3 in einer Ansicht von oben zeigt, und
- Fig. 5: eine teilweise Schnittansicht durch eine mechanische Betätigungseinrichtung zeigt, in der eine Baugruppe mittels eines Befestigungsrings nach Fig. 1 unter Verwendung der Vorrichtung gemäß den Fig. 2 bis 4 montiert ist.

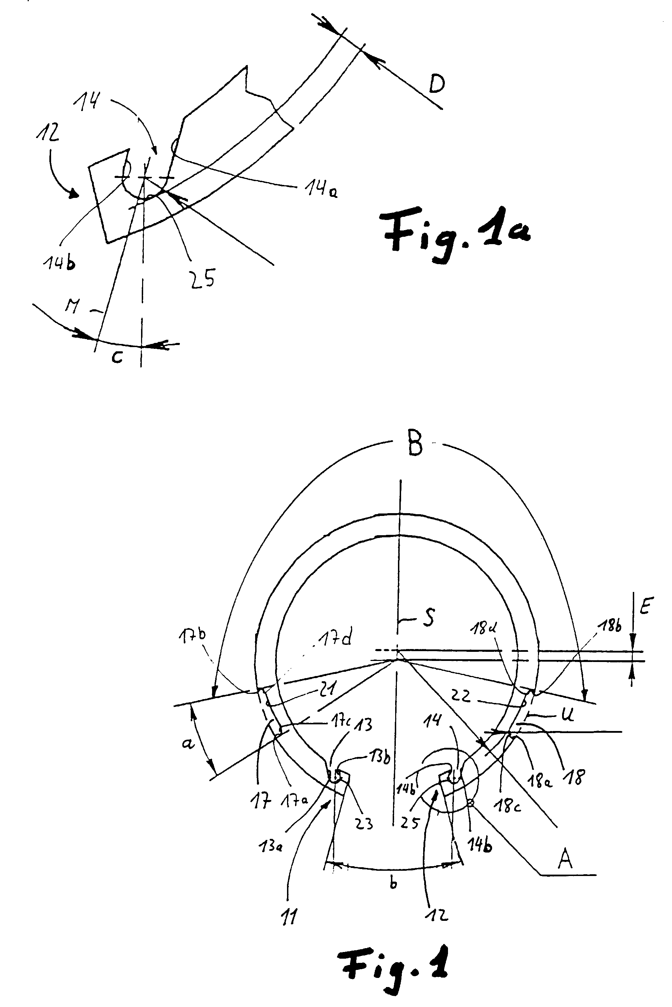

Fig. 1 zeigt einen aus kalt gezogenem Federstahl gestanzten und trocken Zink-posphatierten Befestigungsring gemäß der Erfindung, der eine im Ruhezustand etwa kreisrunde Gestalt hat. Der Befestigungsring weist zwei voneinander beabstandete Ringenden 11, 12 auf und hat über einen Bereich B von etwa 202° einen im wesentlichen konstanten Querschnitt. Dieser Bereich B ist zu den Ringenden 11, 12 symmetrisch angeordnet, so daß der Befestigungsring auch zu einer zwischen den Ringenden 11 und 12 verlaufenden Symmetrieachse S des Befestigungsrings symmetrisch ist.

Im Bereich jedes Ringendes 11, 12 ist eine zum Innenumfang des Befestigungsrings hin offene Ausnehmung 13, 14 angeordnet. Diese Ausnehmungen 13, 14 dienen zum Spannen des Rings vor seiner Montage. An beiden Enden des Bereichs im wesentlichen konstanten Querschnitts B grenzt jeweils eine zum Außenumfang des Befestigungsrings hin offene Ausnehmung 17, 18 an. Diese Ausnehmungen 17, 18 schließen einen Winkelbereich a von etwa 21° ein. Die Ausnehmungen 17, 18 haben einen zur Umhüllenden U des Befestigungsrings exzentrisch nach innen versetzten Grund 21, 22, der einen konvexe, halbkreisförmige Gestalt hat. An den Grund 21, 22 der nach außen offenen Ausnehmungen 17, 18 schließen sich Flanken 17a, 17b; 18a, 18b mit jeweils abgerundeten Übergängen 17c, 17d; 18c, 18d an. Durch die Exzentrität des nach innen versetzten Grundes um die Strecke E in Richtung auf den Bereich B entlang der Symmetrieachse S ist die dem jeweiligen Ringende 11, 12 nähere Flanke 17a, 18a jeder der nach außen hin offenen Ausnehmungen 17, 18 tiefer als die von dem jeweiligen Ringende 11, 12 entferntere Flanke 17b, 18b. Die nach außen hin offenen Ausnehmungen 17, 18 reduzieren den Querschnitt des Befestigungsrings um etwa ein Viertel im Bereich der vom jeweiligen Ringende 11, 12 abliegenden Flanke 17b, 18b und um etwa die Hälfte im Bereich der dem jeweiligen Ringende 11, 12 näher liegenden Flanke 17a, 18a.

Die Ringenden 11, 12 sind im Ruhezustand mit einem Öffnungswinkel b von etwa 30° voneinander beabstandet.

Die zum Innenumfang hin offenen Ausnehmungen 13, 14 haben einen halbkreisförmigen Grund 23, 25 an den sich beidseitig gerade verlaufende, parallele Flanken 13a, 13b; 14a, 14b anschließen. Die nach innen hin offenen Ausnehmungen 13, 14 reichen soweit in den Querschnitt des Befestigungsrings hinein, daß dieser an seiner dünnsten Stelle D des Ringendes 11, 12 auf etwa 20% bis 40% reduziert ist. Die nach innen hin offenen Ausnehmungen 13, 14 sind so ausgerichtet, daß ihre Mittelachse M von der Mitte des Befestigungsrings wegweist. Dabei schließt die Mittelachse der Ausnehmungen 13, 14 mit der Symmetrieachse S des Befestigungsrings einen Winkel c von etwa 15° ein.

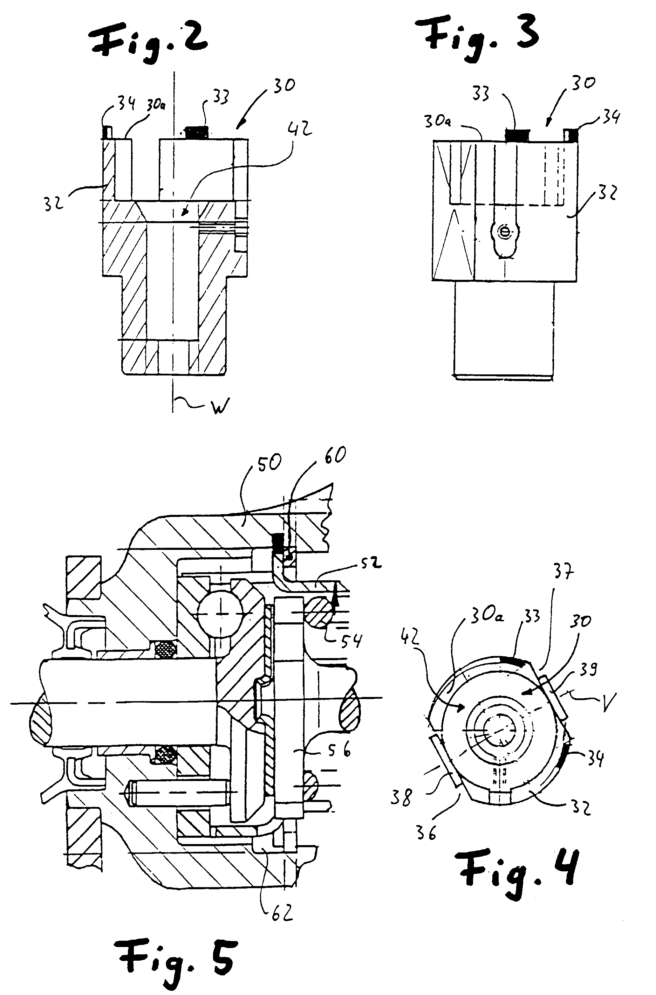

In den Fig. 2 bis 4 ist eine Vorrichtung zur Montage eines vorstehend beschriebenen Befestigungsrings gezeigt. Diese Vorrichtung weist eine Aufnahme 30 für einen (nicht gezeigten) Befestigungsring auf. Die Aufnahme 30 ist durch eine Stirnfläche 30a einer rohrförmigen Hülse 32 gebildet, wobei die Stirnfläche 30a der Hülse 32 eine der Umfangsgestalt des Befestigungsrings angenäherte Form hat, also ebenfalls im wesentlichen kreisringförmig ist. An der Stirnfläche 30a sind zwei Vorsprünge 33, 34 angeordnet, deren Gestalt so gewählt ist, daß sie bei zusammengedrückten Ringenden formschlüssig in die zum Außenumfang des Befestigungsrings hin offenen Ausnehmungen eingreifen. An der Außenseite der rohrförmigen Hülse 32 schließen die Vorsprünge 33, 34 bündig mit dieser ab.

Die Aufnahme 30 bzw. die zylindrische Hülse 32 haben zwei diametral einander gegenüberliegende kreisabschnittsförmige Verjüngungen 36, 37 (siehe Fig. 4), die beide rechtwinklig zu einer zwischen den beiden Vorsprüngen 33 und 34 verlaufenden Symmetrieachse V angeordnet sind.

In jeder kreisabschnittsförmigen Verjüngung 36, 37 ist eine Verschiebeeinrichtung 38, 39 angeordnet, deren Abmessungen so gewählt sind, daß sie nicht über den Umkreis der Hülse 32 hinausragen. Dabei greift die erste Verschiebeeinrichtung 39 im Bereich der Ringenden zwischen den Vorsprüngen 33, 34 an einem in der Aufnahme 30 befindlichen Befestigungsring an. Die zweite Verschiebeeinrichtung 38 greift im geschlossenen Bereich des Befestigungsrings an. Die beiden Verschiebeeinrichtung 38, 39 sind durch eine (nicht veranschaulichte) Betätigungseinrichtung gemeinsam in der Weise betätigbar, daß die beiden Verschiebeeinrichtungen 38, 39 parallel zur Längsachse W (siehe Fig. 2) der Hülse 32 zwischen einer zurückgezogenen Stellung, in der die Verschiebeeinrichtungen 38, 39 gegenüber der Aufnahme 30 bzw. die Stirnfläche 30a zurückgenommen sind, und einer vorgeschobenen Stellung verschiebbar, in der die Verschiebeeinrichtungen 38, 39 die Vorsprünge 33, 34 in axialer Richtung überragen.

Die Hülse 32 weist einen Hohlraum 42 auf, der zur paßgenauen Aufnahme eines mit dem Befestigungsring zu befestigenden Bauteils eingerichtet ist.

Das erfindungsgemäße Verfahren zur Befestigung eines Bauteils oder einer Baugruppe mit Hilfe eines oben beschriebenen Befestigungsrings wird nachstehend unter Bezugnahme auf Fig. 5 beschrieben.

Fig. 5 zeigt einen Teil einer im übrigen nicht weiter interessierenden mechanischen Betätigungseinheit wie sie z.B. in der EP 0 403 635 B1 gezeigt ist. Ein Zylinder 50 enthält einen Federkäfig 52 für eine Feder 54, wobei der Federkäfig 52 und die Feder 54 nur sehr verkürzt gezeigt sind. Die Feder 54 wirkt auf eine Betätigungsstange 56, die den Federkäfig 52 durchragt.

Zur Montage des Federkäfigs 52 und der zu diesem gehörenden Bauteile in dem Zylinder 50 wird der Federkäfig 52 zusammen mit den anderen Bauteilen zu einer Baugruppe vormontiert. Der Befestigungsring wird mit Hilfe einer Spannzange, deren Greifer in die zum Innenumfang hin offenen Ausnehmungen an den Ringenden des Befestigungsrings eingreifen, zusammengezogen, und auf die Aufnahme 30 aufgelegt. Der Befestigungsring wird dabei in seinem Durchmesser reduziert, behält jedoch im wesentlichen seine Kreisringform. Die Vorsprünge 33, 34 an der Stirnfläche 30a der Hülse 32 halten den Befestigungsring in seinem verringerten Durchmesser. Nun wird die vormontierte Baugruppe mit dem Federkäfig in den Hohlraum 42 der Hülse 32 eingeführt. Das Werkzeug mit dem Befestigungsring und der Baugruppe werden nun in den Zylinder 50 soweit eingeführt, bis der Befestigungsring 60 auf der Höhe einer in der Innenwandung des Zylinders 50 eingearbeiteten Ringnut 62 sich befindet. Dann werden die beiden Verschiebungseinrichtungen 38, 39 aus ihrer zurückgezogenen Stellung in eine vorgeschobene Stellung verschoben. Dabei verläßt der Befestigungsring die Aufnahme 30 und die nach außen gerichteten Ausnehmungen des Befestigungsrings lösen sich von den Vorsprüngen 33, 34. Der Befestigungsring springt in seine ursprüngliche Form mit dem vergrößerten Druchmesser zurück und greift in die Ringnut 62 ein. Damit ist der Federkäfig 52 unverlierbar in dem Zylinder 50 gehalten. Die Hülse 32 wird anschließend aus dem Zylinder 50 herausgezogen. Damit ist der Montagevorgang beendet.

Bei der Demontage wird mit Hilfe einer Spannzange, deren Greifer in die zum Innenumfang des Befestigungsrings hin offenen Ausnehmungen eingreift, der Befestigungsring zusammengezogen, so daß sich sein Durchmesser verringert. In dieser Stellung kann der Befestigungsring aus der Ringnut 62 in axialer Richtung des Zylinders 50 herausgezogen werden. Damit ist die Baugruppe frei und kann ebenfalls aus dem Zylinder 50 herausgenommen werden.

## Patentansprüche

1. Befestigungsring mit
- einer im Ruhezustand etwa kreisrunden Gestalt, der
- zwei voneinander beabstandete Ringenden (11, 12),
- einen über wenigstens 150° seines Umfangs im wesentlichen konstanten Durchmesser und Querschnitt, sowie
- im Bereich jedes Ringendes (11, 12) eine zu seinem Innenumfang hin offene Ausnehmung (13, 14) aufweist.

2. Befestigungsring nach Anspruch 1 dadurch gekennzeichnet, daß der Bereich im wesentlichen konstanten Querschnitts (B) zu den Ringenden (11, 12) symmetrisch ist.

3. Befestigungsring nach Anspruch 1 oder 2 dadurch gekennzeichnet, daß der Bereich im wesentlichen konstanten Querschnitts (B) sich über bis zu 250°, vorzugsweise über etwa 202° des Umfangs des Befestigungsrings erstreckt.

4. Befestigungsring nach Anspruch 1 bis 3, dadurch gekennzeichnet, daß an die beiden Enden des Bereichs im wesentlichen konstanten Querschnitts (B) jeweils eine zum Außenumfang des Befestigungsrings hin offene Ausnehmung (17, 18) angrenzt.

5. Befestigungsring nach Anspruch 4, dadurch gekennzeichnet, daß jede der zum Außenumfang des Befestigungsrings hin offenen Ausnehmungen (17, 18) einen Winkelbereich (a) von etwa 5° - 30°, vorzugsweise etwa 21° einschließt.

6. Befestigungsring nach Anspruch 4 oder 5, dadurch gekennzeichnet, daß jede der zum Außenumfang des Befestigungsrings hin offenen Ausnehmungen (17, 18) einen zur Umhüllenden (U) des Befestigungsrings exzentrisch nach innen versetzten Grund (21, 22) aufweist, der eine konvexe, vorzugsweise etwa halbkreisförmige Gestalt hat.

7. Befestigungsring nach Anspruch 4,5 oder 6, dadurch gekennzeichnet, daß an den Grund (21, 22) jeder der zum Außenumfang des Befestigungsrings hin offenen Ausnehmungen (17, 18) jeweils Flanken (17a, 17b; 18a, 18b) der Ausnehmungen (17, 18) mit abgerundeten Übergängen (17c, 17d; 18c, 18d) anschließen.

8. Befestigungsring nach einem der Ansprüche 4 - 7, dadurch gekennzeichnet, daß die dem jeweiligen Ringende (11, 12) nähere Flanke (17a, 18a) jeder der zum Außenumfang des Befestigungsrings hin offenen Ausnehmungen (17, 18) tiefer als die vom jeweiligen Ringende (11, 12) entferntere Flanke (17b, 18b) ist.

9. Befestigungsring nach einem der Ansprüche 4 - 8, dadurch gekennzeichnet, daß jede der zum Außenumfang des Befestigungsrings hin offenen Ausnehmungen (17, 18) etwa 10% - 60% des Querschnitts des Befestigungsrings einnimmt.

10. Befestigungsring nach einem der Ansprüche 1 - 9, dadurch gekennzeichnet, daß die Ringenden (11, 12) mit einem Öffnungswinkel (b) von 5° - 50° voneinander beabstandet sind.

11. Befestigungsring nach einem der Ansprüche 1 - 10, dadurch gekennzeichnet, daß die zum Innenumfang hin offenen Ausnehmungen (13, 14) einen konvexen, etwa halbkreisförmigen Grund (23, 25) und sich daran anschließende gerade verlaufende Flanken (13a, 13b; 14a, 14b) haben.

12. Befestigungsring nach dem vorhergehenden Anspruch, dadurch gekennzeichnet, daß die zum Innenumfang hin offenen Ausnehmungen (13, 14) jeweils eine von der Mitte des Befestigungsrings wegweisende Mittelachse (M) aufweisen.

13. Befestigungsring nach dem vorhergehenden Anspruch, dadurch gekennzeichnet, daß die von der Mitte des Befestigungsrings wegweisende Mittelachse (M) mit der Symmetrieachse (S) des Befestigungsrings einen Winkel (c) von etwa 5° - 25° einschließt.

14. Vorrichtung zur Montage eines Befestigungsrings nach einem der vorhergehenden Ansprüche, gekennzeichnet durch
- eine Aufnahme (30) für einen Befestigungsring, dessen Ringenden zumindest teilweise zusammengedrückt sind, und
- zwei aus der Aufnahme vorstehenden Vorsprüngen (33,34), die jeweils in eine der zum Außenumfang des Befestigungsrings hin offenen Ausnehmungen eingreifen.

15. Vorrichtung zur Montage eines Befestigungsrings nach dem vorhergehenden Anspruch, dadurch gekennzeichnet, daß die Aufnahme (30) durch eine der Umfangsgestalt des Befestigungsrings angenäherte Hülse (32) gebildet ist, bei der an einer Stirnfläche (30a) die Vorsprünge (33, 34) angeordnet sind.

16. Vorrichtung zur Montage eines Befestigungsrings nach dem vorhergehenden Anspruch, dadurch gekennzeichnet, daß die Aufnahme (30) wenigstens eine im Querschnitt kreisabschnitts- oder kreissektorförmige Verjüngung (36, 37) aufweist, an der eine Verschiebeeinrichtung (38, 39) angeordnet ist.

17. Vorrichtung zur Montage eines Befestigungsrings nach dem vorhergehenden Anspruch, dadurch gekennzeichnet, daß die Aufnahme (30) eine erste Verschiebeeinrichtung (39) aufweist, die im Bereich der Ringenden an einem Befestigungsring angreift und vorzugsweise eine zweite Verschiebeeinrichtung (38) aufweist, die der ersten Verschiebeeinrichtung (39) diametral gegenüberliegend angeordnet und insbesondere mit dieser gemeinsam betätigbar ist.

18. Vorrichtung zur Montage eines Befestigungsrings nach einem der beiden vorhergehenden Ansprüche, dadurch gekennzeichnet, daß jede Verschiebeeinrichtung (38, 39) in Längsrichtung der Hülse (32) zwischen einer zurückgezogenen Stellung, in der sie gegenüber der Aufnahme (30) zurückgenommen ist, und einer vorgeschobenen Stellung verschiebbar ist, in der sie die Vorsprünge (33, 34) überragt.

19. Vorrichtung zur Montage eines Befestigungsrings nach einem der Ansprüche 14 - 18, dadurch gekennzeichnet, daß die Hülse (32) zum Einführen eines mit dem Befestigungsring zu befestigenden Bauteils oder Baugruppe eingerichtet ist.

20. Verfahren zur Montage eines Befestigungsrings mit den Merkmalen eines oder mehrerer der Ansprüche 1 - 14, mit folgenden Schritten:
a) Zusammenziehen der Ringenden, so daß der Befesti gungsring einen verringerten Durchmesser aufweist,
b) Halten des Befestigungsrings auf seinem verringerten Durchmesser,
c) Einführen des Befestigungsrings in eine Öffnung bis zu einer Nut oder zu einer Stufe in der Öffnung,
d) Freigeben des Befestigungsrings, so daß sich dessen Durchmesser wieder vergrößert, und sich der Befestigungsring in der Nut einfügt oder an der Stufe anliegt, wobei
b1) der Schritt b) des Haltens des Befestigungsrings mittels der zum Außenumfang hin offenen Ausnehmungen erfolgt, in die jeweils ein Vorsprung eingreift.

21. Verfahren zur Montage eines Befestigungsrings mit den Merkmalen eines oder mehrerer der Ansprüche 1 - 14, nach dem vorhergehenden Anspruch, wobei
d1) der Schritt d) des Freigebens des Befestigungsrings durch Verschieben des Befestigungsrings erfolgt, so daß die Ausnehmungen von den Vorsprüngen freikommen.

## Claims

1. A ring fastener, with
- a circular configuration in the rest condition, comprising
- two ring ends (11, 12) spaced from each other,
- an essentially constant diameter and cross-section over at least 150° of its circumference, as well as
- in the area of each ring end (11, 12) a recess (13, 14) opening toward its inner circumference.

2. A ring fastener according to Claim 1, characterized in that the area with the essentially constant cross-section (B) is symmetrical to the ring ends (11, 12).

3. A ring fastener according to Claim 1 or 2, characterized in that the area with the essentially constant cross-section (B) extends over up to 250°, preferably over approx. 202°, of the circumference of the ring fastener.

4. A ring fastener according to Claims 1 through 3, characterized in that adjacent to the two ends of the area with the essentially constant cross-section (B) one recess (17, 18) each is arranged which opens toward the outer circumference of the ring fastener.

5. A ring fastener according to Claim 4, characzerized in that each of the recesses (17, 18) opening toward the outer circumference of the ring fastener includes an anglular range (a) of approx. 5° to 30°, preferably approx. 21°.

6. A ring fastener according to Claim 4 or 5, characterized in that each of the recesses (17, 18) opening toward the outer circumference of the ring fastener comprises a bottom (21, 22) eccentrically offset in an inward direction with respect to the envelope (U) of the rings fastener, which has a convex, preferably approx. semi-circular configuration.

7. A ring fastener according to Claim 4, 5 or 6, characterized in that adjacent to the bottom (21, 22) of each of the recesses (17, 18) opening toward the outer circumference of the ring fastener flanks (17a, 17b; 18a, 18b) of the recesses (17, 18) with rounded transistions (17c, 17d; 18c, 18d) are arranged.

8. A ring fastener according to one of Claims 4 trough 7, characterized in that the flank (17a, 18a) of each of the recesses (17, 18) opening toward the outer circumference of the ring fastener which is closer to the respective ring end (11, 12) is deeper than the flank (17b, 18b) which has a greater distance from the respective ring end (11, 12).

9. A ring fastener according to one of Claims 4 trough 8, characterized in that each of the recesses (17, 18) opening toward the outer circumference of the ring fastener takes up approx. 10% to 60% of the cross-section of the ring fastener.

10. A ring fastener according to one of Claims 1 trough 9, characterized in that the ring ends (11, 12) are spaced from each other by an opening angle (b) of 5° to 50°.

11. A ring fastener according to one of Claims 1 trough 10, characterized in that the recesses (13, 14) opening toward the inner circumference have a convex, approx. semi-circular bottom (23, 25) with adjoining straight flanks (13a, 13b; 14a, 14b).

12. A ring fastener according to the previous claim, characterized in that each of the recesses (13, 14) opening toward the inner circumference has a centre axis (M) directed away from the centre of the ring fastener.

13. A ring fastener according to the previous claim, characterized in that the centre axis (M) directed away from the centre of the ring fastener and the axis of symmetry (S) of the ring fastener include an angle (c) of approx. 5° to 25°.

14. A method for the installation of a ring fastener according to one of the previous claims, characterized by
- a holding means (30) for a ring fastener, the ring ends of which are at least partly compressed, and
- two projections (33, 34) protruding from the holding means, each of which engages one of the recesses opening toward the outer circumference of the ring fastener.

15. A device for the installation of a ring fastener according to the previous claim, characterized in that the holding means (30) is formed by a sleeve (32) of the approximate circumferential configuration of the ring fastener, where at a face (30a) the projections (33, 34) are arranged.

16. A device for the installation of a ring fastener according to the previous claim, characterized in that the holding means (30) comprises at least one taper (16, 17) the cross-section of which has the shape of a circular section or a circular segment, at which a sliding means (38, 39) is arranged.

17. A device for the installation of a ring fastener according to the previous claim, characterized in that the holding means (30) comprises a first sliding means (39) which in the area of the rings ends engages a ring fastener, and preferably a second slid_ ing means (38) which is arranged diametrically opposed to the first sliding means (39) and which, in particular, can be actuated together with it.

18. A device for the installation of a ring fastener according to one of the two previous claims, characterized in that each sliding means (38, 39) can be moved in the longitudinal direction of the sleeve (32) between a retracted position where it is set back relative to the holding means (30) and an advanced position where it protrudes beyond the projections (33, 34).

19. A device for the installation of a ring fastener according to one of Claims 14 through 18, characterized in that the sleeve (32) is adapted for the insertion of a component or an assembly to be secured by means of the ring fastener.

20. A method for the installation of a ring fastener with the characteristics of one or several of Claims 1 through 14,comprising the following steps:
a) Contracting the ring ends so that the ring fastener has a reduced diameter,
b) maintaining the ring fastener at its reduced diameter;
c) inserting the ring fastener into an opening up to a groove or a shoulder in the opening;
d) releasing the ring fastener so that its diameter increases again and the ring fastener becomes seated in the groove or abuts the shoulder,
b1) the step b) of retaining the ring fastener is effected by means of the recesses opening toward the outer circumference, with a projection each engaging the respective recess.

21. A method for the installation of a ring fastener with the characteristics of one or several of Claims 1 through 14, according to the previous claim, wherein
d1) the step d) of releasing the ring fastener is effected by displacinq the ring fastener, so that the recesses come clear of the projections.

## Revendications

1. Bague de fixation présentant
- une configuration sensiblement circulaire à l'état de repos,
- deux extrémités de bague (11, 12) espacées l'une de l'autre,
- un diamètre et une section sensiblement constants sur au moins 150° de son pourtour, ainsi que
- un creux (13, 14) dans la zone de chaque extrémité de bague (11, 12), ouvert vers sa périphérie intérieure.

2. Bague de fixation selon la revendication 1, caractérisée en ce que la zone de section sensiblement constante (B) est symétrique par rapport aux extrémités de bague (11, 12).

3. Bague de fixation selon la revendication 1 ou 2, caractérisée en ce que la zone de section sensiblement constante (B) s'étend sur jusqu'à 250°, de préférence sur environ 202°, du pourtour de la bague de fixation.

4. Bague de fixation selon l'une quelconque des revendications 1 à 3, caractérisée en ce qu'un creux (17, 18) ouvert vers la périphérie extérieure de la bague de fixation est adjacent à chacune des deux extrémités de la zone de section sensiblement constante (B).

5. Bague de fixation selon la revendication 4, caractérisée en ce que chacun des creux (17, 18) ouverts vers la périphérie extérieure de la bague de fixation délimite une zone angulaire (a) d'environ 5° à 30°, de préférence d'environ 21°.

6. Bague de fixation selon la revendication 4 ou 5, caractérisée en ce que chacun des creux (17, 18) ouverts vers la périphérie extérieure de la bague de fixation présente un fond (21, 22) décalé excentriquement vers l'intérieur par rapport à la ligne enveloppante (U) de la bague de fixation, qui a une forme convexe, de préférence sensiblement demi-circulaire.

7. Bague de fixation selon la revendication 4, 5 ou 6, caractérisée en ce que des flancs respectifs (17a, 17b; 18a, 18b) des creux (17, 18) se raccordent par des portions de transition arrondies (17c, 17d; 18c, 18d) au fond (21, 22) de chacun des creux (17, 18) ouverts vers la périphérie extérieure de la bague de fixation.

8. Bague de fixation selon l'une quelconque des revendications 4 à 7, caractérisée en ce que les flancs (17a, 18a) les plus proches des extrémités de bague (11, 12) respectives de chacun des creux (17, 18) ouverts vers la périphérie extérieure de la bague de fixation sont plus profonds que les flancs (17b, 18b) les plus éloignés des extrémités de bague (11, 12) respectives.

9. Bague de fixation selon l'une quelconque des revendications 4 à 8, caractérisée en ce que chacun des creux (17, 18) ouverts vers la périphérie extérieure de la bague de fixation occupe environ 10 % - 60 % de la section de la bague de fixation.

10. Bague de fixation selon l'une quelconque des revendications 1 à 9, caractérisée en ce que les extrémités de bague (11, 12) sont espacées l'une de l'autre d'un angle d'ouverture (b) de 5° - 10°.

11. Bague de fixation selon l'une quelconque des revendications 1 à 10, caractérisée en ce que les creux (13, 14) ouverts vers la périphérie intérieure possèdent un fond (23, 25) convexe sensiblement demi-circulaire et des flancs (13a, 13b; 14a, 14b) qui s'y raccordent rectilignes.

12. Bague de fixation selon l'une quelconque des revendications précédentes, caractérisée en ce que les creux (13, 14) ouverts vers la périphérie intérieure présentent chacun un axe médian (M) s'éloignant du milieu de la bague de fixation.

13. Bague de fixation selon l'une quelconque des revendications précédentes, caractérisée en ce que l'axe médian (M) s'éloignant du milieu de la bague de fixation délimite avec l'axe de symétrie (S) de la bague de fixation un angle (c) d'environ 5° - 25°.

14. Dispositif pour le montage d'une bague de fixation selon l'une quelconque des revendications précédentes, caractérisé par
- un logement (30) pour une bague de fixation dont les extrémités de bague sont au moins partiellement pressées ensemble, et
- deux parties en saillie (33, 34) dépassant du logement qui pénètrent chacune dans l'un des creux ouverts vers la périphérie extérieure de la bague de fixation.

15. Dispositif pour le montage d'une bague de fixation selon la revendication précédente, caractérisé en ce que le logement (30) est formé par une douille (32) s'approchant de la configuration périphérique de la bague, à une surface frontale (30a) de laquelle sont disposées les parties en saillie (33, 34).

16. Dispositif pour le montage d'une bague de fixation selon la revendication précédente, caractérisé en ce que le logement (30) présente au moins un rétrécissement (36, 37) en forme de segment de cercle ou de secteur de cercle sur lequel est disposé un dispositif de déplacement (38, 39).

17. Dispositif pour le montage d'une bague de fixation selon la revendication précédente, caractérisé en ce que le logement (30) présente un premier dispositif de déplacement (39) qui attaque une bague de fixation dans la zone des extrémités de bague et de préférence un deuxième dispositif de déplacement (38) qui est disposé diamétralement opposé au premier dispositif de déplacement (39) et peut être actionné en particulier conjointement avec celui-ci.

18. Dispositif pour le montage d'une bague de fixation selon l'une des deux revendications précédentes, caractérisé en ce que chaque dispositif de déplacement (38, 39) peut être déplacé entre une position en retrait dans laquelle il est en retrait par rapport au logement (30) et une position avancée dans laquelle il dépasse les parties en saillie (33, 34).

19. Dispositif pour le montage d'une bague de fixation selon l'une quelconque des revendications 14 à 18, caractérisé en ce que la douille (32) est conçue pour mettre en place une pièce constitutive ou un groupe constitutif à fixer avec la bague de fixation.

20. Procédé de montage d'une bague de fixation présentant les caractéristiques de l'une ou de plusieurs des revendications 1 à 14, comprenant les opérations consistant à :
a) tirer l'une vers l'autre les extrémités de bague de façon que la bague de fixation présente un diamètre réduit,
b) maintenir la bague de fixation dans son état à diamètre réduit,
c) introduire la bague de fixation dans une ouverture jusqu'à une gorge ou jusqu'à un gradin dans l'ouverture,
d) libérer la bague de fixation de façon que son diamètre s'agrandisse à nouveau et que la bague de fixation s'emboîte dans la gorge ou s'applique contre le gradin,
b1) l'opération b) de maintien de la bague de fixation ayant lieu au moyen des creux ouverts vers la périphérie extérieure dans chacun desquels pénètre une partie en saillie respective.

21. Procédé pour le montage d'une bague de fixation présentant les caractéristiques de l'une ou de plusieurs des revendications 1 à 14, selon la revendication précédente, selon lequel
d1) l'opération d) de libération de la bague de fixation a lieu par déplacement de la bague de fixation de telle façon que les creux soient libérés des parties en saillies.
